# EUROPEAN PATENT SPECIFICATION

(11) **EP 3 296 471 B1**
(45) Date of publication and mention of the grant of the patent: **23.12.2020**
(21) Application number: 16189640.2
(22) Date of filing: 20.09.2016
(51) Int. Cl.: E03C 1/04, F16K 31/00, G05D 23/13

(54) **THERMOSTATIC MIXING TAP WITH PIPE ELEMENT**
THERMOSTATISCHE MISCHBATTERIE MIT ROHRELEMENT
ROBINET MÉLANGEUR THERMOSTATIQUE AVEC ÉLÉMENT DE TUYAU

(43) Date of publication of application: 21.03.2018
(73) Proprietor: Ideal Standard International NV, 1935 Zaventem (BE)
(72) Inventor: Becker, Thomas, 54558 Strohn (DE); Graham, Conway, Staffs, WS11 7YJ (GB); Kutscheid, Stefan, 54550 Daun (DE)
(74) Representative: Feucker, Max Martin

(56) References cited:
- EP-A1- 2 141 394
- DE-A1-102005 023 757
- FR-A1- 3 013 417
- US-A- 3 276 691

## Description

The present invention relates to a thermostatic mixing tap comprising of an elongated housing having a cold water inlet opening towards its one end, a hot water inlet opening towards its other end and a mixed water outlet aperture, further comprising a temperature control component for mixing the cold and hot water and at least one hot water pipe element, which is arranged completely in the housing and in which the hot water is guided towards the temperature control component.

A thermostatic mixing tap with the aforementioned features is known from EP 0 943 740 B1. The hot water is guided in a pipe made of plastic through a space in which mixed water flows. As almost the whole volume of the housing is filled with water, the volume of stagnated water in a not used state is high. Furthermore, bacteria, e.g. pseudomonas, are likely to attach and grow on plastic surfaces, in particular when the water stagnates. Accordingly, this thermostatic mixing tap provides a greater risk of promoting bacterial growth in a health care environment.

A thermostatic mixing tap with the features of the preamble of claim 1 is known from DE 10 2005 023 757 A. As the hot water pipe element is made of metal, the thermal energy of the hot water can easily be transferred to the housing, so that the housing heats up. A thermostatic mixing tap with insulated hot water passages is disclosed in FR 3 013 417 A.

Therefore, it is an object of the present invention to resolve the known problems and to provide a thermostatic mixing tap, which outside temperature of the housing can be kept low.

This object is solved by the thermostatic mixing tap of the independent claim. Preferred embodiments of the thermostatic mixing tap are described in the dependent claims and in the description.

In particular, the object is solved by a thermostatic mixing tap with the above features, wherein the hot water pipe element is made of a metal, wherein the internal surfaces of the hot water pipe element coming into contact with the water are provided at least in sections with a material having antibacterial properties and wherein the hot water pipe element is fixed with at least one section in the housing by a socket, which is made of a thermally insulating material.

The invention has the advantage that due to the metallic pipe element a stiff, pressure resistant and demountable connection between the water supply and the thermostatic control component is given, wherein due to the antibacterial properties of the internal surface of the pipe element the attachment and growth of bacteria within the pipe element is hindered. As the pipe element is held in the housing by the thermally insulating socket, the thermal energy of the water within the pipe element can not be transferred easily to the outside wall of the housing, keeping the outside temperature of the housing low. Accordingly, the thermostatic mixing tap can be used in a health care environment.

The inner diameter of the pipe element, through which the water flows, can be kept small in the order of below 2 cm [centimeter], preferable below 0,5 cm. This way the flow velocity of the water through the pipe element is high, so that the deposition of bacteria or depress on the inner surface of the pipe element is avoided and deposited material is flushed away. Furthermore, by a small inner diameter the stagnation volume is kept low.

The material with antibacterial properties is preferably copper. For example, the internal surfaces of the pipe element and/or the later described water guiding element might be coated with copper or an alloy comprising copper. Alternatively, the pipe element and/or of the water guiding element can be made completely of copper, or preferably an alloy comprising copper. In a preferred embodiment the pipe element and/or the water guiding element is completely made of brass (CuZn).

Preferably, the mixed water outlet control component is arranged along the elongated housing between the cold water inlet opening and the hot water inlet opening. The mixed water outlet aperture is in particular arranged about midway between the cold water inlet opening and the hot water inlet opening.

Preferably, the temperature control component is a common thermostatic mixing valve, which keeps the temperature of the mixed water constant, after it is set to a respective value. The temperature control component can also be embodied in such a way that the temperature control component can be used for opening and shutting the water way for the mixed water.

The thermally insulating material of the socket and the later described sleeve is in particular a plastic. The socket extends over the outer surface of the pipe element in radial direction. Preferably the socket surrounds the pipe element in a section of the pipe element completely. Alternatively, the socket maybe attached to an axial end of the pipe element. The socket can be screwed onto the pipe elements, but it is also possible that the socket is snapped onto the pipe element. The socket abuts radially against the inner surface of the housing so that the pipe element is fixed by the socket in the housing.

In order to further reduce the stagnation volume of the water within the thermostatic mixing tap the thermostatic mixing tap comprises a cold water pipe element, which is arranged completely in the housing and in which the cold water is guided towards the temperature control component, wherein also the cold water pipe element is made of a metal, wherein the internal surfaces of the cold water pipe element coming into contact with the cold water are provided at least in sections with a material having antibacterial properties, wherein the cold water pipe element is fixed with at least one section in the housing with a second socket that is made of a thermally insulating material. The technical teaching regarding the cold water pipe element applies to the hot water pipe element and vice versa. In particular, the cold water pipe element and the respective socket can be claimed independently of the hot water pipe element. The configuration on the cold water side has the advantage that the cold water within the cold water pipe element is insulated against heat from the surrounding and from the hot water side, so that the growth of bacteria on the water side is also reduced.

In order to reduce the number of parts the hot water pipe element and the cold water pipe element have the same geometrical dimensions.

Preferably, at least one pipe element (hot water pipe element and/or cold water pipe element) is surrounded at least over part of its axial extension by an air chamber which is filled with air during use. In particular, two air chambers are formed, one surrounding the hot water pipe element and the other surrounding the cold water pipe element.

It is preferred, that the axial length of the at least one pipe element is larger than one third (1/3) of the axial length of the elongated housing, in particular when both the hot and cold water pipe element are present. If only the hot water pipe element is present, the hot water pipe element is larger than two third (2/3) of the axial length of the elongated housing. It is also preferred, that the total axial length of the one or two air chamber(s) is at least half the length of the elongated housing.

According to an embodiment of the invention a cold water chamber for receiving the cold water out of the cold water pipe element is formed, which at least partially surrounds the temperature control component, preferably in the horizontal plane, and which surrounds an end section of the hot water pipe element, preferably in a vertical plane, wherein preferably part of the cold water chamber surrounding the hot water pipe element is arranged between the air chamber and the hot water chamber. In particular, the cold water chamber, which is formed by the geometry of the housing and is delimited additionally by the hot and/or cold water pipe element and/or other elements of the thermostatic mixing tap, does not extend up to the cold water inlet opening. This way the volume of stagnating water, in case of non-use, is further reduced. Furthermore, the water in the cold water chamber actively cools the outside of the housing in those areas, in which elements, which are in contact with hot water, are in direct contact with the housing. Accordingly, it is avoided that the outside of the housing becomes too hot.

The cool water chamber surrounds only an end section of the hot water pipe element. In particular the cold water section extends less than one third (1/3), preferably less than one fourth (1/4) along the length of the hot water pipe element.

In particular, the housing forms a first wall section for separating the cold water chamber from the air chamber and a second wall section for separating the cold water chamber from a hot water chamber for receiving the hot water out of the hot water pipe element, wherein the hot water pipe element extends through an opening in the first wall section and is plugged with its end into an opening in the second wall section, wherein the hot water pipe element is sealed with respective sealing elements against the wall sections of the housing. Accordingly, the cold water chamber extends from the side of the temperature control component, which faces the cold water inlet opening, towards that side of the temperature control component, which faces the hot water inlet opening, wherein the cold water chamber encloses in an axial direction at least partially the hot water chamber, through which the hot water is guided from the outlet of the hot water pipe element to the temperature control component. This way, the area, in which the hot water pipe element is in direct connection with the housing, is also in direct contact with the cold water in the cold water chamber. Despite the presence of the cold water chamber the volume of stagnant water is relatively small.

In an embodiment, a cold water chamber for receiving cold water is formed, which at least partially surrounds the temperature control component, wherein a third wall section of the housing is formed in such a way that all of the water in the cold water chamber flows past a section of the temperature control component from the cold water side to the hot water side before it enters the water control component. In particular, the third wall section extends between the outlet of the cold water pipe element and that part of the inlet of the temperature control component, which faces the cold water side. Thereby it is avoided that cold water enters the water control component directly, so that all of the cold water needs to flow from the cold water side to the hot water side. This way, the cooling of the surface of the hot water side of the housing is enhanced and further stagnation of water in the cold water chamber even during use is avoided.

Preferably, the housing is formed in such a way that the cold water chamber is arranged between a hot water chamber and the front and upper surface of the housing. This way, in the area, in which the hot water chamber is formed, those surfaces of the housing are in direct contact with the cold water chamber, which are eventually touched by a user. Furthermore, the volume of the hot water chamber is further reduced, thereby reducing the stagnation volume of hot water.

In order that the at least one pipe element can be easily mounted, the hot water pipe element/and or the cold water pipe element can be inserted through an opening in a respective axial end face of the elongated housing, wherein the opening is closed by a cover after mounting. The further advantage of this configuration is that the pipe elements can be inspected, demounted and cleaned after the thermostatic mixing tap is mounted to a wall.

According to a further embodiment of the invention hot water guiding element extends through the hot water inlet opening into the housing and is in fluid communication with the hot water pipe element, wherein the hot water guiding element is surrounded in a section by a sleeve, which is plugged into the hot water inlet opening of the housing, wherein the sleeve is made of a thermally insulating material and the hot water guiding element is made of a metal, which internal surfaces coming into contact with the water are provided at least in sections with a material having antibacterial properties.

As far as the water guiding element is described with respect to the hot water side, all explanations and teachings also apply to a water guiding element for the cold water side. Accordingly, the cold water guiding element extends through the cold water inlet opening into the housing and is in fluid communication with the cold water pipe element, wherein the cold water guiding element is surrounded in a section by a sleeve, which is plugged into the cold water inlet opening of the housing, wherein the sleeve is made of a thermally insulating material and the cold water guiding element is made of a metal, which internal surfaces coming into contact with the water are provided at least in sections with a material having antibacterial properties.

In an installation condition the water guiding elements are connected to the water supply installed in a wall. Due to the plug-in connection of the sleeves to the housing the housing and therein arranged water pipe elements and the temperature control component can be easily removed from the guiding elements, which are connected to the water supply. This way the removed elongated housing and therein arranged elements can be easily cleaned.

In an embodiment the water guiding elements are plugged with one and into the water pipe element, wherein a non-return valve is arranged in the end of the respective water guiding element. The water guiding element is plugged into a lateral opening in the respective pipe element to establish the fluid connection. After removing the housing from the installed guiding elements the non-return valve might be inspected and eventually replaced.

In order to avoid that debris from the water supply advanced into the pipe element(s) and to the water outlet aperture a filter is arranged in each of the water guiding elements upstream of the non-return valve, wherein the filter is accessible through a lateral opening in the guiding element.

The lateral opening in the water guiding element can also be used for purging water through the elements of the thermostatic mixing tap. In order to clean the filter or to purge water into one guiding element an adapter can be plugged into the lateral opening, wherein the adapter can be fixed by a screw connection or by other fixing means within the lateral opening.

In a further embodiment a shut off element is arranged in the water guiding element, which can be screwed into the water guide element from the lateral side to block the flow of water through the water guiding element. In particular, the shut off element is made of metal and provides a metallic sealing, so that the water does not come in contact with the rubber of a sealing element. In particular, the surface of the shut off element has also antibacterial properties. Preferably, the shut off element is made of brass.

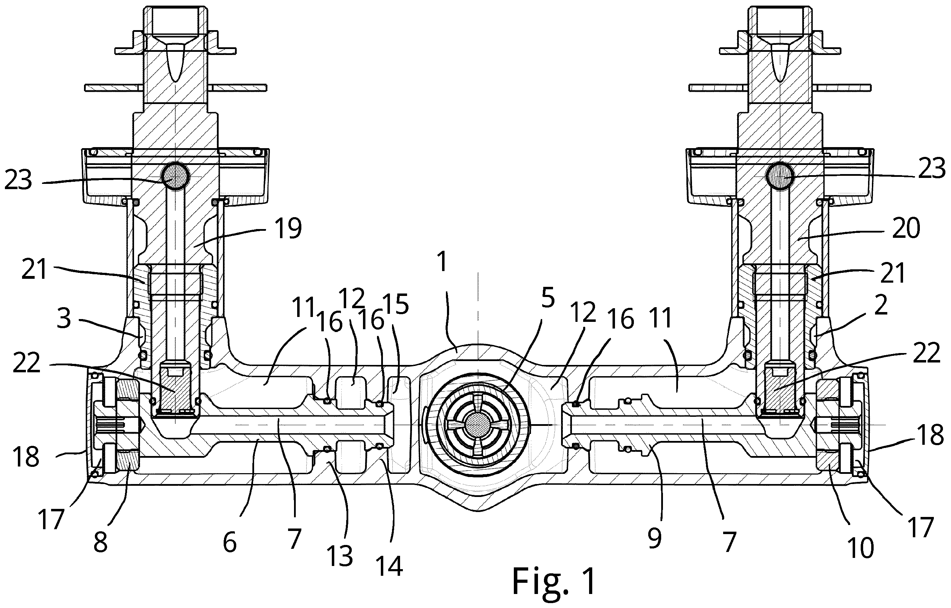

The invention will be described with respect to the embodiment shown in the figures in a way of example. The figures show
- Fig. 1:: A cross sectional view through a thermostatic mixing tap in a horizontal plane,

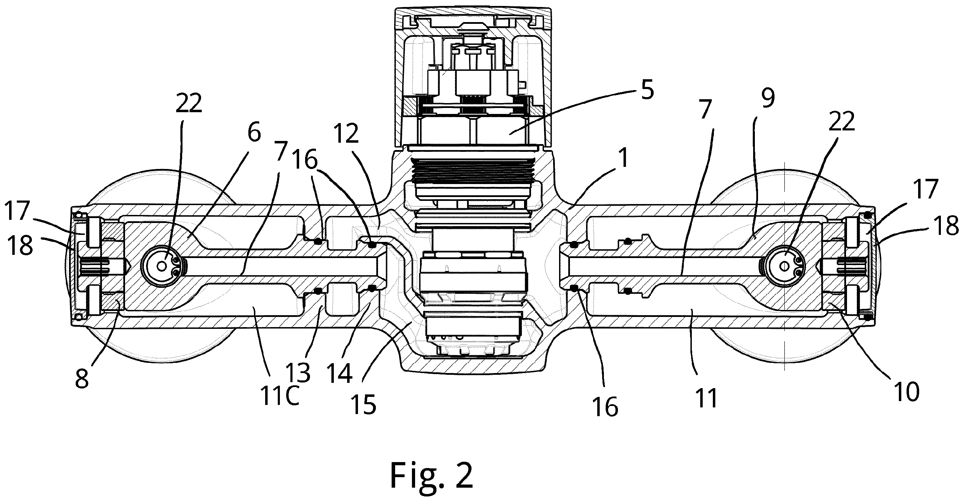

- Fig. 2:: a cross sectional view in a vertical plane through the thermostatic mixing tap shown in Fig. 1,

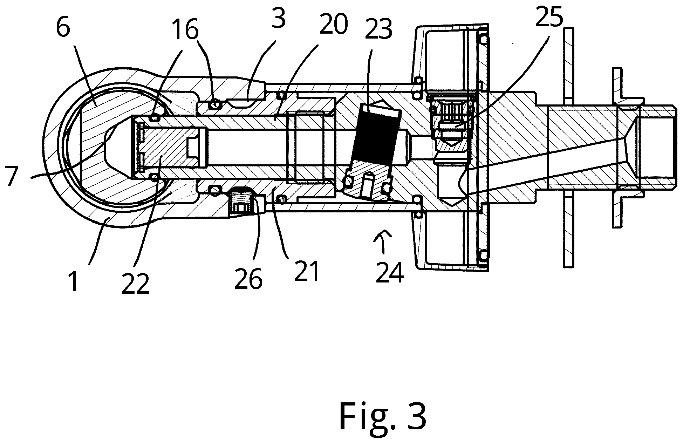

- Fig. 3:: a cross sectional view through the hot water side in a vertical plane perpendicular to the plane of Fig. 1,
- Fig. 4:: a cross sectional view through the thermostatic mixing tap shown in Fig. 1 in a vertical plane in the area of the mixed water outlet aperture and
- Fig. 5:: a cross sectional view in a vertical plane according to Fig. 2 showing a further embodiment of a thermostatic mixing tap.

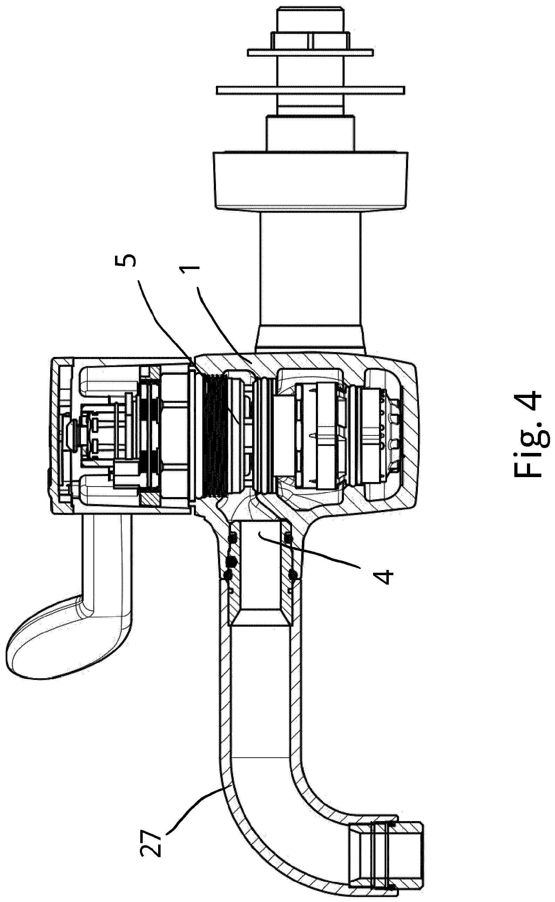

The thermostatic mixing tap shown in the figures comprises an elongated housing 1, which forms a cold water inlet opening 2, a hot water inlet opening 3 at the backside of the housing 1 and a mixed water outlet aperture 4. A temperature control component 5 is arranged in the housing 1 near the mixed water outlet aperture 4. As can be seen from figure 4 an outlet element 27 is plugged into the mixed water outlet aperture 4.

The housing 1 is formed in such a way that the cold water can be supplied from a cold water chamber 12 to the temperature control component 5 and that hot water can be supplied to the temperature control component 5 from a hot water chamber 15. The hot water and cold water provided to the temperature control component 5 is guided by the temperature control component 5 to the mixed water outlet aperture 4.

In order that hot water is supplied to the hot water chamber 15 a hot water guiding element 19 and a hot water pipe element 6 are provided on the hot water side. In order that cold water can be supplied to the cold water chamber 12 a cold water guiding element 20 and a cold water pipe element 9 are provided on the cold water side. The hot water side and the cold water side are basically mirror symmetrically. The differences between the hot water side and the cold water side are described below.

In an installed situation the hot water guiding element 19 is fixedly connected to the hot water supply and the cold water guiding element 20 is fixedly connected to the cold water supply. Accordingly, cold and hot water flows through channels in the connecting elements 19, 20 to the pipe elements 6, 9. Each guiding element 19, 20 is surrounded at its end section by a sleeve 21, with which the guiding elements 19, 20 can be plugged in the cold water inlet opening 2 and hot water inlet opening 3, respectively. The plugged in sleeve 21 is secured to the housing 1 by a screw 26. In the water guiding elements 19, 20 filters 23 are arranged, with which debris from the water supply can be filtered out of the water. The filters 23 may be accessible through a lateral opening 24, so that the filters 23 may be replaced or cleaned. The same lateral opening 24 may be used for purging the thermostatic mixing tap. Furthermore, a shut off element 25 made of brass can be screwed into the hot water guiding element 20 so that the flow of water can be blocked.

At the ends of the water guiding elements 19, 20, which face the pipe elements 6, 9, non-return valves 22 are arranged. With this end the water guiding elements 19, 20 are plugged into the respective pipe elements 6, 9. When the water guiding elements 19, 20 are connected with the water supply, the housing 1 and therein arranged elements can be plugged off the water guiding elements 19, 20 after releasing the screw 26, so that the housing 1 and the therein arranged elements can be inspected and cleaned.

The pipe elements 6, 9 can be inserted into the elongated housing 1 through openings 17 on the axial end faces of the elongated body 1. The openings 17 can be closed by respective covers 18. This way the pipe elements 6, 9 are accessible through the openings 17, so that they can be inspected and eventual removed from the housing 1 for cleaning.

The hot water pipe element 6 is held within the housing 1 on the left side by a socket 8, which is made of a thermally insulating plastic material, so that the hot water pipe element 6 has a certain distance to the housing 1. On the other side the hot water pipe element 6 is plugged into openings in a first wall section 13 and a second wall section 14. Between the first wall section 13 and the second wall section 14 the cold water chamber 12 is formed, so that the end section of the hot water pipe element 6 is in use surrounded by cold water. The hot water pipe element 6 opens into the hot water chamber 15. The hot water pipe element 6 is sealed with sealing elements 16 against the wall sections 13, 14. The hot water pipe element 6 is surrounded about at least half its axial lengths by an air chamber 11.

On the cold water side the cold water pipe element 9 is fixed in the housing 1 by a second plastic socket 10 and on its other end in an opening formed by a wall section of the housing 1. The cold water pipe element 9 is surrounded along most of its axial extension by an air chamber 11, which is separated from the cold water chamber 12 by the wall section, in which the cold water pipe element 9 is plugged.

The water guiding elements 19, 21 and the pipe elements 6, 9 are made of brass, so that the internal surfaces 7 coming into contact with water contain copper, which has antibacterial properties. This way it is avoided that bacteria attach and grow on the internal surfaces 7 of the water guiding elements 19, 20 and the water pipe elements 6, 9.

The water guiding elements 19, 20 and the pipe elements 6, 9 are at least at one end fixed in the housing 1 by sockets 8, 10 and sleeves 21, respectively. The sockets 10, 8 and the sleeves 21 are made of a thermally insulating material, for example plastic, so that a transfer of thermal energy into the housing 1 is strongly reduced. This way it is avoided that the housing heats up, when hot water is flowing through the metallic hot water guiding element 19 and the metallic hot water pipe element 6.

Furthermore, the cold water chamber 12 extends in between the wall sections 13, 14, which are in direct contact with the hot water pipe element 6. This way the cold water in the cold water chamber 12 is in contact with those areas of the housing 1, in which the hot water pipe element 6 is in direct contact with the wall sections 13, 14. This way it is avoided that the thermal energy provided by the hot water in the hot water pipe element 6 is not transferred to the outside of the housing 1.

For reducing the heat transfer the pipe elements 6, 9 are surrounded by the air chambers 11. The volume of the thermostatic mixing tap, in which the water stagnates during non-use, is reduced by the air chambers 11 surrounding the pipe elements 6, 9 and by a small inner cross section of the water guiding elements 19, 20 and the pipe elements 6, 9.

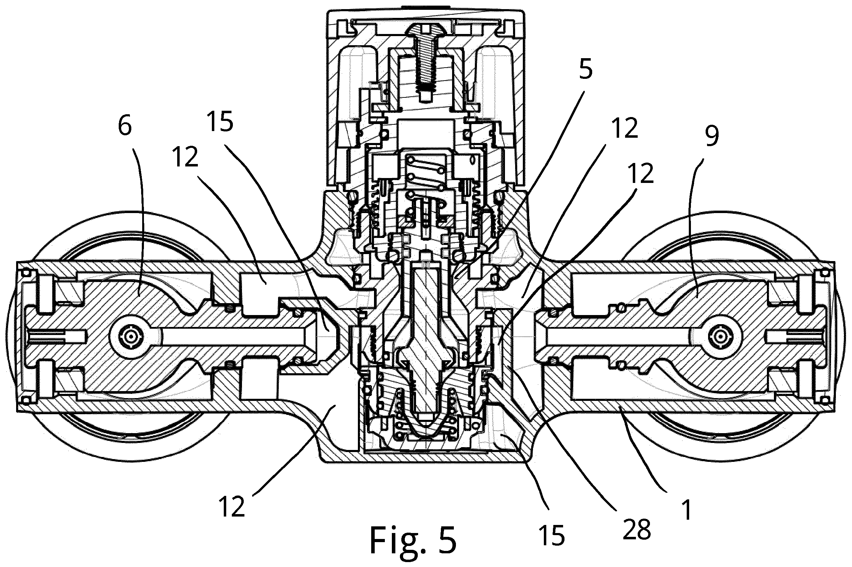

Figure 5 shows an alternative embodiment of a thermostatic mixing tap to the before described embodiment. Same reference signs are used for the same elements. In the following only the differences between the embodiment of Figure 5 and the before described embodiment are referred to.

As can be seen from the multiple reference signs 12 for the one cold water chamber 12, the cold water chamber 12 extends from the cold water side to the hot water side in such away, that it is made sure that all of the cold water needs to flow past the temperature control component 5 to the hot water side before it can enter the temperature control component 5. For avoiding that the cold water enters the temperature control component 5 directly on the cold water side a third wall section 28 is formed by the housing 1. Accordingly, it is avoided that cold water stagnates during use.

Furthermore, the cold water chamber 12 is arranged in such away, that it extends between the hot water chamber 15 and at least the upper surface and front surface of the housing 1. This way the stagnation volume of the hot water is reduced. Furthermore, heating up of the external surface of the housing 1 is further reduced.
- 1: housing
- 2: cold water inlet opening
- 3: hot water inlet opening
- 4: mixed water outlet aperture
- 5: temperature control component
- 6: hot water pipe element
- 7: internal surface
- 8: socket
- 9: cold water pipe element
- 10: second socket
- 11: air chamber
- 12: cold water chamber
- 13: first wall section
- 14: second wall section
- 15: hot water chamber
- 16: sealing element
- 17: opening
- 18: cover
- 19: hot water guiding element
- 20: cold water guiding element
- 21: sleeve
- 22: non-return valve
- 23: filter
- 24: lateral opening
- 25: shut off element
- 26: screw
- 27: outlet element
- 28: third wall section

## Claims

1. Thermostatic mixing tap comprising an elongated housing (1) having a cold water inlet opening (2) towards its one end, a hot water inlet opening (3) towards an opposite end of the housing (1) and a mixed water outlet aperture (4), further comprising a temperature control component (5) for mixing the cold and hot water and at least one hot water pipe element (6), which is arranged completely in the housing (1) and in which the hot water is guided towards the temperature control component (5), wherein the hot water pipe element (6) is made of a metal, wherein the internal surfaces (7) of the hot water pipe element (6) coming into contact with the water are provided at least in sections with a material having antibacterial properties for reducing the attachment and growth of bacteria within the hot water pipe element (6), **characterized in that** the hot water pipe element (6) is fixed with at least one section thereof in the housing (1) by a socket (8), which is made of a thermally insulating material for reducing transfer of thermal energy of the water within the hot water pipe element (6) to the housing (1).

2. Thermostatic mixing tap according to claim 1, **characterized in that** the thermostatic mixing tap comprises a cold water pipe element (9), which is arranged completely in the housing (1) and in which the cold water is guided towards the temperature control component (5), wherein also the cold water pipe element is made of a metal, wherein the internal surfaces (7) of the cold water pipe element (9) coming into contact with the cold water are provided at least in sections with a material having antibacterial properties for reducing the attachment and growth of bacteria within the cold water pipe element (9), wherein the cold water pipe element (9) is fixed with at least one section thereof in the housing (1) with a second socket (10), which is made of a thermally insulating material for reducing transfer of thermal energy of the water within the cold water pipe element (9) to the housing (1).

3. Thermostatic mixing tap according to claim 1 or 2, wherein the at least one pipe element (6, 9) is surrounded at least over part of its axial extension by an air chamber (11) which is filled with air during use.

4. Thermostatic mixing tap according to one of the preceding claims, wherein a cold water chamber (12) for receiving the cold water out of the cold water pipe element (9) is formed, which at least partially surrounds the temperature control component (5) and which additionally surrounds only an end section of the hot water pipe element (6).

5. Thermostatic mixing tap according to claim 4 when depending on claim 3, wherein the housing (1) forms a first wall section (13) for separating the cold water chamber (12) from the air chamber (11) and a second wall section (14) for separating the cold water chamber (12) from a hot water chamber (15), wherein the hot water pipe element (6) extends through an opening in the first wall section (13) and is plugged with its end into an opening in the second wall section (14), wherein the hot water pipe element (6) is sealed with respective sealing elements (16) against the walls sections (13, 14) of the housing.

6. Thermostatic mixing tap according to one of claims 2 and 3 when claim 3 is dependent on claim 2, wherein a cold water chamber (12) for receiving the cold water out of the cold water pipe element (9) is formed, which at least partially surrounds the temperature control component (5) and wherein a third wall section (28) of the housing (1) is formed in such a way that all of the water in the cold water chamber (12) flows past a section of the temperature control component (5) from the cold water side to the hot water side before it enters the temperature control component (5).

7. Thermostatic mixing tap according to claim 6, wherein the housing is formed in such a way that the cold water chamber (12) is arranged between a hot water chamber (15) and the front and upper surface of the housing (1).

8. Thermostatic mixing tap according to one of the preceding claims, wherein the hot water pipe element (6) and/or the cold water pipe element (9) are inserted through an opening (17) in a respective axial end face of the elongated housing (1), wherein the opening is closed by a cover (18).

9. Thermostatic mixing tap according to one of the preceding claims, wherein a hot water guiding element (19) extends through the hot water inlet opening (3) into the housing (1) and is in fluid communication with the hot water pipe element (6), wherein the hot water guiding element (19) is surrounded in a section by a sleeve (21), which is plugged into the hot water inlet opening (3) of the housing (1), wherein the sleeve (21) is made of a thermally insulating material and the hot water guiding element (19) is made of a metal, internal surfaces (7) of the hot water guiding element (19) which are coming into contact with the water are provided at least in sections with a material having antibacterial properties.

10. Thermostatic mixing tap according to claim 9, wherein the hot water guiding element (19) is plugged with one end into the hot water pipe element (6), wherein a non-return valve (22) is arranged in the end of the hot water guiding element (19).

11. Thermostatic mixing tap according to claim 9 or 10, wherein a filter (23) is arranged in the hot water guiding element (19), in particular upstream of the non-return valve (22), wherein the filter (23) is accessible through a lateral opening (24).

12. Thermostatic mixing tap according to claim 11, wherein the hot water guiding element (19) is purged through the lateral opening (24).

13. Thermostatic mixing tap according to one of claims 9 to 12, wherein a shut off element (25) is arranged in the hot water guiding element (19), wherein the shut off element (25) is screwed into the hot water guiding element (19) from the lateral side to block the flow of water through the hot water guiding element (19).

## Patentansprüche

1. Thermostat-Mischbatterie, die ein längliches Gehäuse (1) umfasst, das an seinem einen Ende eine Kaltwasser-Einlassöffnung (2), an einem entgegengesetzten Ende des Gehäuses (1) eine Heißwasser-Einlassöffnung (3) und eine Mischwasser-Auslassöffnung (4) aufweist, wobei sie ferner ein Temperaturregulierungsbauteil (5) zum Mischen des kalten und des heißen Wassers und wenigstens ein Heißwasser-Rohrelement (6), das vollständig in dem Gehäuse (1) angeordnet ist und in dem das heiße Wasser zu dem Temperaturregulierungsbauteil (5) hin geleitet wird, umfasst, wobei das Heißwasser-Rohrelement (6) aus einem Metall hergestellt ist, wobei Innenflächen (7) des Heißwasser-Rohrelements (6), die in Berührung mit dem Wasser kommen, wenigstens in Abschnitten mit einem Material versehen sind, das antibakterielle Eigenschaften zum Verringern des Anhaftens und des Wachstums von Bakterien innerhalb des Heißwasser-Rohrelements (6) aufweist, **dadurch gekennzeichnet, dass** das Heißwasser-Rohrelement (6) mit wenigstens einem Abschnitt desselben in dem Gehäuse (1) durch eine Buchse (8) befestigt ist, die aus einem wärmeisolierenden Material zum Verringern einer Übertragung von Wärmeenergie des Wassers innerhalb des Heißwasser-Rohrelements (6) zu dem Gehäuse (1) hergestellt ist.

2. Thermostat-Mischbatterie nach Anspruch 1, **dadurch gekennzeichnet, dass** die Thermostat-Mischbatterie ein Kaltwasser-Rohrelement (9) umfasst, das vollständig in dem Gehäuse (1) angeordnet ist und in dem das kalte Wasser zu dem Temperaturregulierungsbauteil (5) hin geleitet wird, wobei auch das Kaltwasser-Rohrelement (9) aus einem Metall hergestellt ist, wobei Innenflächen (7) des Kaltwasser-Rohrelements (9), die in Berührung mit dem kalten Wasser kommen, wenigstens in Abschnitten mit einem Material versehen sind, das antibakterielle Eigenschaften zum Verringern des Anhaftens und des Wachstums von Bakterien innerhalb des Kaltwasser-Rohrelements (9) aufweist, wobei das Kaltwasser-Rohrelement (9) mit wenigstens einem Abschnitt desselben in dem Gehäuse (1) mit einer zweiten Buchse (10) befestigt ist, die aus einem wärmeisolierenden Material zum Verringern einer Übertragung von Wärmeenergie des Wassers innerhalb des Kaltwasser-Rohrelements (9) zu dem Gehäuse (1) hergestellt ist.

3. Thermostat-Mischbatterie nach Anspruch 1 oder 2, wobei wenigstens ein Rohrelement (6, 9) wenigstens über einen Teil seiner axialen Ausdehnung durch eine Luftkammer (11) umgeben ist, die während der Benutzung mit Luft gefüllt ist.

4. Thermostat-Mischbatterie nach einem der vorhergehenden Ansprüche, wobei eine Kaltwasserkammer (12) zum Aufnehmen des kalten Wassers aus dem Kaltwasser-Rohrelement (9) gebildet ist, die wenigstens teilweise das Temperaturregulierungsbauteil (5) umgibt und die zusätzlich nur ein Endabschnitt des Heißwasser-Rohrelements (6) umgibt.

5. Thermostat-Mischbatterie nach Anspruch 4, wenn abhängig von Anspruch 3, wobei das Gehäuse (1) einen ersten Wandabschnitt (13) zum Trennen der Kaltwasserkammer (12) von der Luftkammer (11) und einen zweiten Wandabschnitt (14) zum Trennen der Kaltwasserkammer (12) von einer Heißwasserkammer (15) bildet, wobei sich das Heißwasser-Rohrelement (6) durch eine Öffnung in dem ersten Wandabschnitt (13) erstreckt und mit seinem Ende in eine Öffnung in dem zweiten Wandabschnitt (14) eingesteckt ist, wobei das Heißwasser-Rohrelement (6) mit jeweiligen Abdichtungselementen (16) gegenüber den Wandabschnitten (13, 14) des Gehäuses abgedichtet ist.

6. Thermostat-Mischbatterie nach einem der Ansprüche 2 und 3, wenn Anspruch 3 abhängig ist von Anspruch 2, wobei eine Kaltwasserkammer (12) zum Aufnehmen des kalten Wassers aus dem Kaltwasser-Rohrelement (9) gebildet ist, die wenigstens teilweise das Temperaturregulierungsbauteil (5) umgibt, und wobei ein dritter Wandabschnitt (28) des Gehäuses (1) auf eine solche Weise gebildet ist, dass alles Wasser in der Kaltwasserkammer (12) an einem Abschnitt des Temperaturregulierungsbauteils (5) vorbei von der Kaltwasserseite zu der Heißwasserseite fließt, bevor es in das Temperaturregulierungsbauteil (5) eintritt.

7. Thermostat-Mischbatterie nach Anspruch 6, wobei das Gehäuse auf eine solche Weise gebildet ist, dass die Kaltwasserkammer (12) zwischen einer Heißwasserkammer (15) und der vorderen und der oberen Fläche des Gehäuses (1) angeordnet ist.

8. Thermostat-Mischbatterie nach einem der vorhergehenden Ansprüche, wobei das Heißwasser-Rohrelement (6) und/oder das Kaltwasser-Rohrelement (9) durch eine Öffnung (17) in einer jeweiligen axialen Endfläche des länglichen Gehäuses (1) eingesetzt sind, wobei die Öffnung durch eine Abdeckung (18) verschlossen ist.

9. Thermostat-Mischbatterie nach einem der vorhergehenden Ansprüche, wobei sich ein Heißwasser-Führungselement (19) durch die Heißwasser-Einlassöffnung (3) in das Gehäuse (1) erstreckt und in Fluidverbindung mit dem Heißwasser-Rohrelement (6) steht, wobei das Heißwasser-Führungselement (19) in einer Sektion durch eine Hülse (21) umgeben ist, die in die Heißwasser-Einlassöffnung (3) des Gehäuses (1) eingesteckt ist, wobei die Hülse (21) aus einem wärmeisolierenden Material hergestellt ist und das Heißwasser-Führungselement (19) aus einem Metall hergestellt ist, wobei Innenflächen (7) des Heißwasser-Führungselements (19), die in Berührung mit dem Wasser kommen, wenigstens in Abschnitten mit einem Material versehen sind, das antibakterielle Eigenschaften aufweist.

10. Thermostat-Mischbatterie nach Anspruch 9, wobei das Heißwasser-Führungselement (19) mit einem Ende in das Heißwasser-Rohrelement (6) eingesteckt ist, wobei ein Rückschlagventil (22) in dem Ende des Heißwasser-Führungselements (19) angeordnet ist.

11. Thermostat-Mischbatterie nach Anspruch 9 oder 10, wobei ein Filter (23) in dem Heißwasser-Führungselement (19), insbesondere stromaufwärts von dem Rückschlagventil (22), angeordnet ist, wobei der Filter (23) durch eine seitliche Öffnung (24) zugänglich ist.

12. Thermostat-Mischbatterie nach Anspruch 11, wobei das Heißwasser-Führungselement (19) durch die seitliche Öffnung (24) gereinigt wird.

13. Thermostat-Mischbatterie nach einem der Ansprüche 9 bis 12, wobei ein Absperrelement (25) in dem Heißwasser-Führungselement (19) angeordnet ist, wobei das Absperrelement (25) von der seitlichen Seite in das Heißwasser-Führungselement (19) geschraubt ist, um den Fluss von Wasser durch das Heißwasser-Führungselement (19) zu sperren.

## Revendications

1. Robinet de mélange thermostatique comprenant un logement (1) allongé ayant une ouverture d'entrée d'eau froide (2) en direction de son extrémité, une ouverture d'entrée d'eau chaude (3) en direction d'une extrémité opposée du logement (1) et une ouverture de sortie d'eau mélangée (4), comprenant en outre un composant de commande de température (5) pour mélanger l'eau chaude et l'eau froide et au moins un élément de tuyau d'eau chaude (6) qui est agencé complètement dans le logement (1) et dans lequel l'eau chaude est guidée en direction du composant de commande de température (5), dans lequel l'élément de tuyau d'eau chaude (6) est en métal, dans lequel les surfaces intérieures (7) de l'élément de tuyau d'eau chaude (6) venant en contact avec l'eau sont prévues au moins dans des sections avec un matériau ayant des propriétés antibactériennes pour réduire la fixation et la croissance des bactéries à l'intérieur de l'élément de tuyau d'eau chaude (6), **caractérisé en ce que** l'élément de tuyau d'eau chaude (6) est fixé avec au moins une section de celui-ci dans le logement (1) par un embout femelle (8) qui est fait d'un matériau thermo-isolant pour réduire le transfert d'énergie thermique de l'eau à l'intérieur de l'élément de tuyau d'eau chaude (6) vers le logement (1).

2. Robinet de mélange thermostatique selon la revendication 1, **caractérisé en ce que** le robinet de mélange thermostatique comprend un élément de tuyau d'eau froide (9) qui est agencé complètement dans le logement (1) et dans lequel l'eau froide est guidée en direction du composant de commande de température (5), dans lequel l'élément de tuyau d'eau froide est également en métal, dans lequel les surfaces intérieures (7) de l'élément de tuyau d'eau froide (9) venant en contact avec l'eau froide sont dotées au moins dans des sections d'un matériau ayant des propriétés antibactériennes pour réduire la fixation et la croissance des bactéries à l'intérieur de l'élément de tuyau d'eau froide (9), dans lequel l'élément de tuyau d'eau froide (9) est fixé avec au moins une section de celui-ci dans le logement avec un deuxième embout femelle (10) qui est fabriqué dans un matériau thermo-isolant pour réduire le transfert d'énergie thermique de l'eau à l'intérieur de l'élément de tuyau d'eau froide (9) vers le logement (1).

3. Robinet de mélange thermostatique selon la revendication 1 ou 2, dans lequel l'au moins un élément de tuyau (6, 9) est entouré au moins sur une partie de son extension axiale par une chambre à air (11) qui est remplie d'air pendant l'utilisation.

4. Robinet de mélange thermostatique selon l'une quelconque des revendications précédentes, dans lequel une chambre d'eau froide (12) pour recevoir l'eau froide hors de l'élément de tuyau d'eau froide (9) est formée, qui entoure au moins partiellement le composant de commande de température (5) et qui en outre entoure uniquement une section d'extrémité de l'élément de tuyau d'eau chaude (6).

5. Robinet de mélange thermostatique selon la revendication 4, **caractérisé en ce que** le logement (1) forme une première section de paroi (13) pour séparer la chambre d'eau froide (12) de la chambre à air (11) et une deuxième section de paroi (14) pour séparer la chambre d'eau froide (12) d'une chambre d'eau chaude (15), dans lequel l'élément de tuyau d'eau chaude (6) s'étend à travers une ouverture dans la première section de paroi (13) et est connecté par son extrémité dans une ouverture dans la deuxième section de paroi (14), dans lequel l'élément de tuyau d'eau chaude (6) est fermé hermétiquement avec des éléments d'étanchéité (16) contre les sections de paroi (13, 14) du logement.

6. Robinet de mélange thermostatique selon l'une des revendications 1 à 3, dans lequel une chambre d'eau froide (12) pour recevoir l'eau froide hors de l'élément de tuyau d'eau froide (9) est formée, qui entoure au moins partiellement le composant de commande de température (5) et dans lequel une troisième section (28) du logement (1) est formée de telle façon que toute l'eau dans la chambre d'eau froide (12) s'écoule au-delà d'une section du composant de commande de température (5) du côté eau froide vers le côté eau chaude avant qu'elle n'entre dans le composant de commande de température (5).

7. Robinet de mélange thermostatique selon la revendication 6, dans lequel le logement est formé de telle manière que la chambre d'eau froide (12) est agencée entre une chambre d'eau chaude (15) et la surface avant et supérieure du logement (1).

8. Robinet de mélange thermostatique selon l'une des revendications précédentes, dans lequel l'élément de tuyau d'eau chaude (6) et/ou l'élément de tuyau d'eau froide (9) sont insérés à travers une ouverture (17) dans une face d'extrémité axiale respective du logement allongé (1), dans lequel l'ouverture est fermée par un capot (18).

9. Robinet de mélange thermostatique selon l'une des revendications précédentes, dans lequel un élément de guidage d'eau chaude (19) s'étend à travers l'ouverture d'entrée d'eau chaude (3) jusque dans le logement (1) et est en communication fluidique avec l'élément de tuyau d'eau chaude (6), dans lequel l'élément de guidage d'eau chaude (19) est entouré dans une section par un manchon (21) qui est connecté dans l'ouverture d'entrée d'eau chaude (3) du logement (1), dans lequel le manchon (21) est fait d'un matériau thermo-isolant et l'élément de guidage d'eau chaude (19) est en métal, des surfaces intérieures (7) de l'élément de guidage d'eau chaude (19) qui viennent en contact avec l'eau sont dotées au moins dans des sections d'un matériau ayant des propriétés antibactériennes.

10. Robinet de mélange thermostatique selon la revendication 9, dans lequel l'élément de guidage d'eau chaude (19) est connecté par une extrémité dans l'élément de tuyau d'eau chaude (6), dans lequel un clapet de non-retour (22) est agencé dans l'extrémité de l'élément de guidage d'eau chaude (19).

11. Robinet de mélange thermostatique selon la revendication 9 ou 10, dans lequel un filtre (23) est agencé dans l'élément de guidage d'eau chaude (19), en particulier en amont du clapet de non-retour (22), dans lequel le filtre (23) est accessible par une ouverture latérale (24).

12. Robinet de mélange thermostatique selon la revendication 11, dans lequel l'élément de guidage d'eau chaude (19) est purgé par l'ouverture latérale (24).

13. Robinet de mélange thermostatique selon l'une des revendications 9 à 12, dans lequel un élément de coupure (25) est agencé dans l'élément de guidage d'eau chaude (19), dans lequel l'élément de coupure (25) est vissé dans l'élément de guidage d'eau chaude (19) depuis le côté latéral pour bloquer l'écoulement d'eau à travers l'élément de guidage d'eau chaude (19).
